# EUROPÄISCHE PATENTSCHRIFT

(11) **EP 2 925 548 B1**
(45) Veröffentlichungstag und Bekanntmachung des Hinweises auf die Patenterteilung: **01.01.2020**
(21) Anmeldenummer: 13794914.5
(22) Anmeldetag: 21.11.2013
(51) Int. Cl.: B60J 7/185, B60J 7/02, B60J 7/043

(54) **DACHSYSTEM FÜR EIN KRAFTFAHRZEUG**
ROOF SYSTEM FOR A MOTOR VEHICLE
SYSTÈME DE TOIT POUR VÉHICULE AUTOMOBILE

(30) Priorität: 29.11.2012 DE 102012221845; 19.12.2012 DE 102012223709
(43) Veröffentlichungstag der Anmeldung: 07.10.2015
(73) Patentinhaber: BOS GmbH & Co. KG, 73760 Ostfildern (DE)
(72) Erfinder: HEIDAN, Michael, 70569 Stuttgart (DE); EBERST, Hartmut, 73529 Schwäbisch Gmünd (DE); MARQUART, Marius, 71292 Friolzheim (DE)
(74) Vertreter: Patentanwälte Ruff, Wilhelm, Beier, Dauster & Partner mbB
(86) Internationale Anmeldenummer: PCT/EP2013/074417
(87) Internationale Veröffentlichungsnummer: WO 2014/082920

(56) Entgegenhaltungen:
- EP-A1- 1 334 858
- EP-A1- 1 844 967
- WO-A1-2006/086958
- WO-A1-2007/079747
- DE-A1-102004 042 450
- DE-A1-102007 004 258
- FR-A1- 2 601 303
- US-A1- 2005 231 007

## Beschreibung

Die Erfindung betrifft ein Dachsystem für ein Kraftfahrzeug mit einem ortsfesten Dachausschnitt sowie mit einem beweglich gelagerten Dachteil zum Verschließen und Freigeben des Dachausschnittes, das mittels einer Ausstell- und Führungsmechanik zwischen einer Schließposition, einer Ausstellposition und einer Öffnungsposition verlagerbar ist, wobei die Ausstell- und Führungsmechanik beidseitig des Dachteiles jeweils einen - in Fahrtrichtung des Kraftfahrzeugs gesehen - vorderen Ausstellhebel sowie einen hinteren Ausstellhebel umfasst, die über jeweils einen Anlenkpunkt mit dem Dachteil schwenkbeweglich verbunden sind und mit einem in einer Führungsschienenanordnung verfahrbaren Steuerschlitten in Wirkverbindung stehen.

Ein derartiges Dachsystem ist aus der DE 10 2007 004 258 A1 und aus der WO 2007/079747 A1 bekannt. Das bekannte Dach-system weist ein bewegliches Dachteil auf, das zum Freigeben und Verschließen eines Dachausschnitts dient. Das bewegliche Dachteil ist mittels einer Ausstell- und Führungsmechanik zwischen seiner Schließstellung und seiner Öffnungsposition verlagerbar. Die Ausstell- und Führungsmechanik weist auf gegenüberliegenden Seiten des Dachteiles jeweils einen vorderen sowie einen hinteren Ausstellhebel auf, die in jeweils einer Führungsschienenanordnung verfahrbar sind. Zum Aussteuern der Ausstellhebel ist ein Steuerschlitten vorgesehen, der mittels einer Steuerkulisse den hinteren Ausstellhebel aussteuert.

Aufgabe der Erfindung ist es, ein Dachsystem der eingangs genannten Art zu schaffen, das einen kompakten Aufbau hat und eine sichere und wartungsarme Funktion ermöglicht.

Diese Aufgabe wird durch die Merkmale des Patentanspruchs 1 gelöst. Hierdurch ist ein besonders kompakter Aufbau der Ausstell- und Führungsmechanik erzielbar. Durch die Verteilung der Gleitführungen auf zwei unterschiedliche Führungsebenen ist die Führungsschienenanordnung einem reduzierten Verschleiß unterworfen.

Dadurch wird in besonders einfacher Weise eine Blockierung des vorderen Ausstellhebels während einer Ausstellbewegung des hinteren Ausstellhebels erreicht, um so einen hinteren Randbereich des Dachteiles über eine Dachflächenkontur hinweg anheben zu können. Der Steuerschlitten für den hinteren Ausstellhebel kann wesentlich einfacher gestaltet sein, da er lediglich noch den Führungsschlitten für den vorderen Ausstellhebel mitnehmen muss, sobald der gesamte Dachteil ausgestellt ist und über einen feststehenden Dachabschnitt hinweg nach hinten verfahren werden kann. Die Komplexität der einzelnen Bauteile ist gegenüber dem Stand der Technik geringer, es werden weniger Teile benötigt und die Bauteile selbst können einfacher gestaltet sein.

In Ausgestaltung der Erfindung ist der Steuerhebel zwischen einer Raststellung in der Rastaussparung und einer Mitnahmestellung am Steuerschlitten beweglich geführt. Der Steuerhebel ist über seinen gesamten Bewegungsweg zwangsgeführt und kann mit einem Gelenk versehen sein, um die Bewegung zuzulassen.

In weiterer Ausgestaltung der Erfindung ist der Steuerhebel einstückig am Führungsschlitten angeordnet und materialelastisch beweglich. Der Steuerhebel bildet daher ein Festkörpergelenk. Der Steuerhebel kann als Kunststoffbauteil einstückig mit dem ebenfalls aus Kunststoff bestehenden Führungsschlitten hergestellt sein. Alternativ ist es möglich, den Steuerhebel separat herzustellen und anschließend fest mit dem Führungsschlitten zu verbinden, um die einteilige Anordnung des Steuerhebels am Führungsschlitten zu erzielen. Die einstückige Anordnung kann insbesondere durch ein formschlüssiges Verrasten des Steuerhebels mit dem Führungsschlitten erfolgen.

In weiterer Ausgestaltung der Erfindung umfasst der vordere Ausstellhebel ein Stützlager zur Überführung des Ausstellhebels aus einem vorderen Führungsfortsatz in eine obere Führungsebene der Führungsschienenanordnung, wobei das Stützlager insbesondere durch zwei Gleitschuhe gebildet ist, die den Ausstellhebel innenseitig und außenseitig flankieren. Hierdurch wird eine symmetrische Abstützung in der Führungsschienenanordnung erzielt, wodurch sich eine besonders robuste und sichere Führung für das Stützlager des vorderen Ausstellhebels ergibt.

In weiterer Ausgestaltung der Erfindung ist der Führungsschlitten als Lagerbock für ein hinteres Schwenklager des vorderen Ausstellhebels aus Kunststoff hergestellt, und der Steuerhebel ist einstückig an dem Lagerbock angeformt und ragt nach hinten in Richtung des Steuerschlittens ab. Dies ist eine besonders einfache und kostengünstige Ausgestaltung.

In weiterer Ausgestaltung der Erfindung weist der Steuerschlitten eine Steuerkulisse zum Aussteuern des hinteren Ausstellhebels sowie eine Stütz- und Mitnahmeprofilierung zum Steuern des Steuerhebels zwischen seiner Rast- und seiner Mitnahmestellung auf. Der Steuerschlitten umfasst daher eine Doppelfunktion, da er zum einen die Aussteuerfunktion des hinteren Ausstellhebels übernimmt und zum anderen mit dem Steuerhebel derart in Wirkverbindung steht, dass er - je nach Stellung des Dachteiles - die Raststellung des Steuerhebels sichert oder den Steuerhebel gemeinsam mit dem Führungsschlitten für den vorderen Ausstellhebel mitnimmt.

Die Mitnahme des Steuerhebels und damit des Führungsschlittens über den Steuerschlitten erfolgt mechanisch formschlüssig.

In weiterer Ausgestaltung der Erfindung ist die Steuerkulisse in einem kunststoffummantelten Metallsteg vorgesehen. Der Metallsteg gewährleistet eine hohe Stabilität für den entsprechenden Abschnitt des Steuerschlittens.

In weiterer Ausgestaltung der Erfindung greift an dem Steuerschlitten ein Antriebsübertragungsmittel in Form eines längserstreckten Zug-Druck-Mittels an. Das Zug-Druck-Mittel ist vorzugsweise eine Flexwelle, die mittels einer elektrischen Antriebseinheit verlagerbar ist. Vorzugsweise ist eine einzelne elektrische Antriebseinheit vorgesehen, um synchron die beiden Flexwellen auf gegenüberliegenden Seiten der Ausstell- und Führungsmechanik zu bewegen.

In weiterer Ausgestaltung der Erfindung ist an einem Stirnendbereich des Zug-Druck-Mittels ein Mitnahmenocken angeformt, der formschlüssig in eine komplementäre Aufnahme am Steuerschlitten eingreift. Dadurch ist ein besonders einfaches Verbinden des Zug-Druck-Mittels, insbesondere der Flexwelle, mit dem Steuerschlitten erzielbar.

In weiterer Ausgestaltung der Erfindung ist vorgesehen, dass die dachteilseitigen Anlenkpunkte des vorderen und des hinteren Anlenkhebels über ein einteiliges formstabiles Befestigungsprofil miteinander in Verbindung stehen, das sich längs eines Seitenrandes des Dachteiles erstreckt und an dem Seitenrand des Dachteiles befestigt ist. Dadurch wird bereits in einer Vormontageposition eine stabile Zuordnung zwischen vorderem und hinterem Ausstellhebel erreicht. Dadurch, dass das einteilige und formstabile Befestigungsprofil sich durchgängig zwischen vorderem und hinterem Ausstellhebel erstreckt und mit dem Seitenrand des Dachteiles verbunden ist, ergibt sich eine besonders stabile und funktionssichere Abstützung des Dachteiles.

In weiterer Ausgestaltung der Erfindung sind über eine Länge des Befestigungsprofiles verteilt mehr als zwei Befestigungspunkte vorgesehen, an denen das Befestigungsprofil an dem Dachteil befestigt ist. Vorzugsweise sind wenigstens drei Befestigungspunkte vorgesehen, um das Dachteil an dem Befestigungsprofil zu fixieren. Hierdurch wird eine besonders stabile Anbindung des Dachteiles an die Ausstell- und Führungsmechanik erreicht, die wiederum zu einer besonders guten Synchronisierung der beiden Antriebsseiten der Ausstell- und Führungsmechanik mittels der Übertragung durch das Dachteil auf die jeweils andere Seite dient.

In weiterer Ausgestaltung der Erfindung ist die Führungsschienenanordnung frontseitig mit zwei den Führungsfortsatz bildenden, zueinander spiegelsymmetrischen Kulissenelementen versehen, die zur Gleitführung der Gleitschuhe des Stützlagers aus einer unteren Ruhestellung in die obere Führungsebene vorgesehen sind und das Stützlager außen- und innenseitig flankieren. Hierdurch wird eine besonders sichere Abstützung des Stützlagers außen- und innenseitig, d.h. zur Fahrzeugmitte hin und zur Fahrzeugaußenseite hin, erreicht, so dass eine besonders robuste und sichere Führung des vorderen Ausstellhebels aus der Ruhestellung in Richtung der oberen Führungsebene erzielbar ist. Die Kulissenelemente können als separate Kulisseneinsätze hergestellt und mit der Führungsschienenanordnung verbunden sein. Alternativ können die Kulissenelemente als einstückige Fortsätze aus der Führungsschienenanordnung ausgeformt sein. Vorteilhaft sind die einstückigen Fortsätze plastisch verformbar, so dass die Fortsätze auf die gewünschte Form gebogen werden können.

In weiterer Ausgestaltung der Erfindung ist die Rastaussparung mit einem Kunststoffeinsatz versehen. Der Kunststoffeinsatz ermöglicht neben einer Geräuschdämmung die Gestaltung einer definierten Einführgeometrie, so dass eine gute Anpassung zwischen dem Kunststoffeinsatz und dem Rastmittel des Steuerhebels erzielbar ist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
Fig. 1 zeigt schematisch eine Ausführungsform eines erfindungsgemäßen Dachsystems in einer Schließstellung des beweglichen Dachteiles,
Fig. 2a bis 2d in Längsrichtung aufgeschnittener Darstellung eine Seite einer Ausstell- und Führungsmechanik für das bewegliche Dachteil nach Fig. 1 in unterschiedlichen Funktionsstellungen,
Fig. 3a bis 3d die Ausstell- und Führungsmechanik nach den Fig. 2a bis 2d, jedoch nicht von außen, sondern von innen her gesehen,
Fig. 4 in isometrischer Explosionsdarstellung eine linke Seite der Ausstell- und Führungsmechanik nach den Fig. 2a bis 3d - von außen her gesehen,
Fig. 5 die linke Seite der Ausstell- und Führungsmechanik nach Fig. 4 in isometrischer Explosionsdarstellung - von innen her gesehen,
Fig. 6a und 6beinen linken Teil der Ausstell- und Führungsmechanik unter Weglassung der Führungsschienenanordnung in isometrischer Darstellung von außen und von innen,
Fig. 7a und 7bdie Bauteilanordnung nach den Fig. 6a und 6b in einer Zwischenstellung gemäß den Fig. 2b und 3b,
Fig. 8a und 8bdie Bauteilanordnung nach den Fig. 6a und 6b in einer Ausstellposition gemäß den Fig. 2c und 3c,
Fig. 9a und 9bdie Bauteilanordnung gemäß Fig. 8a und 8b in eingerasteter Mitnahmestellung zwischen einem Steuerschlitten und einem Steuerhebel eines vorderen Ausstellhebels,
Fig. 10a und 10b die Bauteilanordnung gemäß den Fig. 6a bis 9b in vollständig ausgefahrener Öffnungsstellung des Dachteiles analog der Fig. 2d und 3d und
Fig. 11 schematisch einen Frontteil der Führungsschienenanordnung mit einstückig angeformten Fortsätzen.

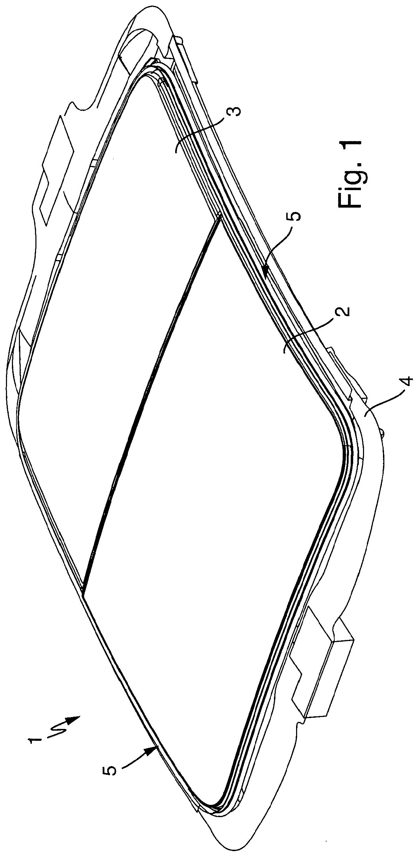

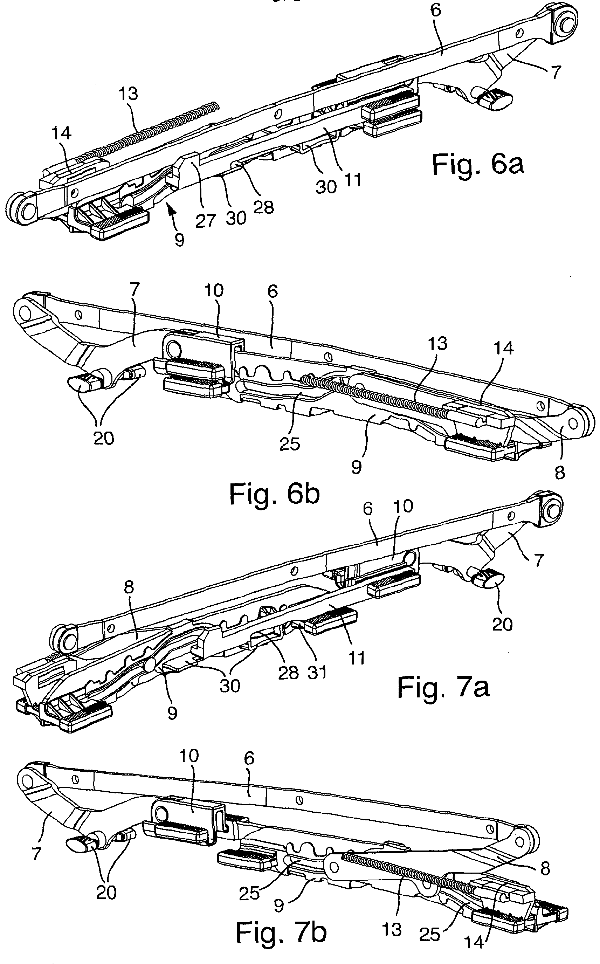

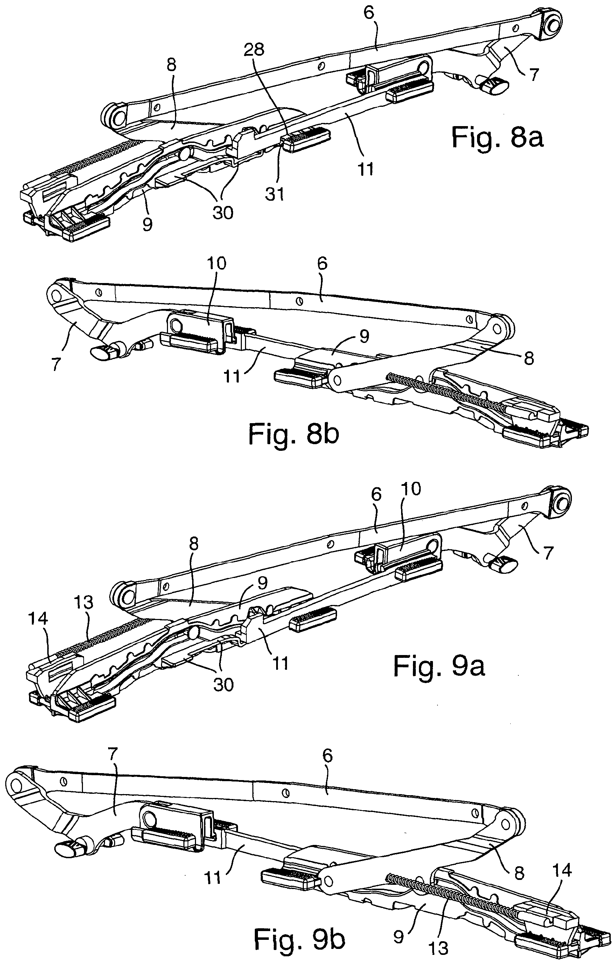

Ein Dachsystem 1, wie es anhand der Fig. 1 bis 11 nachfolgend beschrieben ist, ist für einen Personenkraftwagen vorgesehen und ist in einem Dachbereich einer Fahrzeugkarosserie des Personenkraftwagens integriert. Das Dachsystem 1 weist ein deckelförmiges bewegliches Dachteil auf, das aus einem getönten Glas besteht. Das Dachteil 2 dient zum Freigeben und Verschließen eines Dachausschnittes, durch den Frischluft und Licht von oben her in einen Fahrzeuginnenraum des Personenkraftwagens gelangen kann. In normaler Fahrtrichtung gesehen nach hinten schließt an das bewegliche Dachteil 2 ein feststehender und damit ortsfester Dachabschnitt 3 an, der ebenfalls aus einem getönten Glas hergestellt ist. Das bewegliche Dachteil 2 sowie der ortsfeste Dachabschnitt 3 sind in einem stabilen Rahmen 4 integriert, der eine Vormontage des Dachsystems 1 ermöglicht und für den Einbau in den Dachbereich des Personenkraftwagens in geeigneter Weise mit entsprechenden Abschnitten der Fahrzeugkarosserie verbunden wird. Das Dachsystem 1 wird in den Dachbereich des Personenkraftwagens dicht eingepasst. Der formstabile Rahmen 4 umfasst auf zwei gegenüberliegenden Längsseiten des Dachsystems 1, die sich in eingebautem Zustand zumindest weitgehend in Fahrzeuglängsrichtung erstrecken, jeweils eine Führungsschienenanordnung 5, die für die Führung und Lagerung einer Ausstell- und Führungsmechanik zum Ausstellen und Verlagern des beweglichen Dachteiles 2 zwischen seiner Schließposition und seiner den Dachausschnitt vollständig freigebenden Öffnungsposition dient.

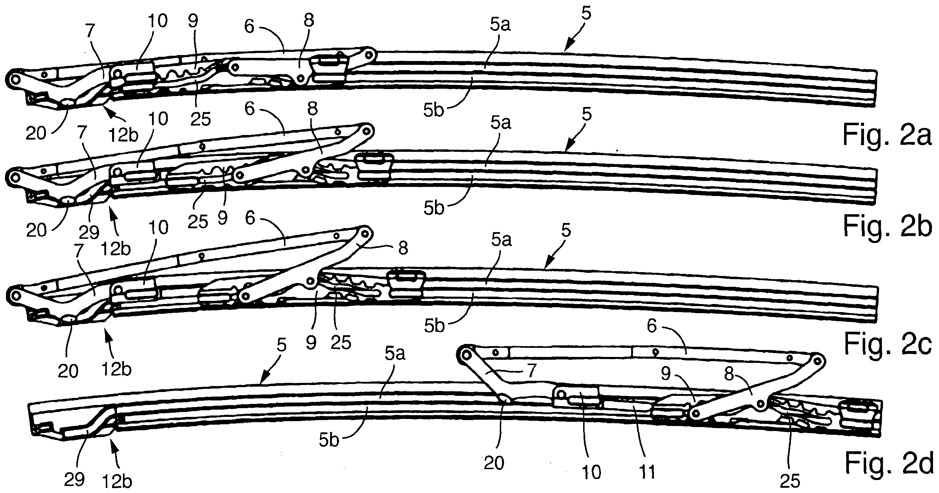

Die Ausstell- und Führungsmechanik ist mit gleichen Bauteilanordnungen auf gegenüberliegenden Längsseiten des Dachteiles 2 versehen, von denen anhand der Fig. 2a bis 10b nachfolgend lediglich die - in normaler Fahrtrichtung gesehen - linke Seite dargestellt ist. Die der gegenüberliegenden Führungsschienenanordnung 5 zugeordnete rechte Seite der Ausstell- und Führungsmechanik ist identisch gestaltet, jedoch spiegelsymmetrisch zu einer vertikalen Mittellängsebene des Personenkraftwagens ausgeführt. Diese in den Zeichnungen nicht dargestellte rechte Seite ist demzufolge analog aufgebaut zur linken Seite, so dass die Beschreibung gemäß den Zeichnungen nach den Fig. 2a bis 10b in gleicher Weise auch für die rechte Seite der Ausstell- und Führungsmechanik gilt.

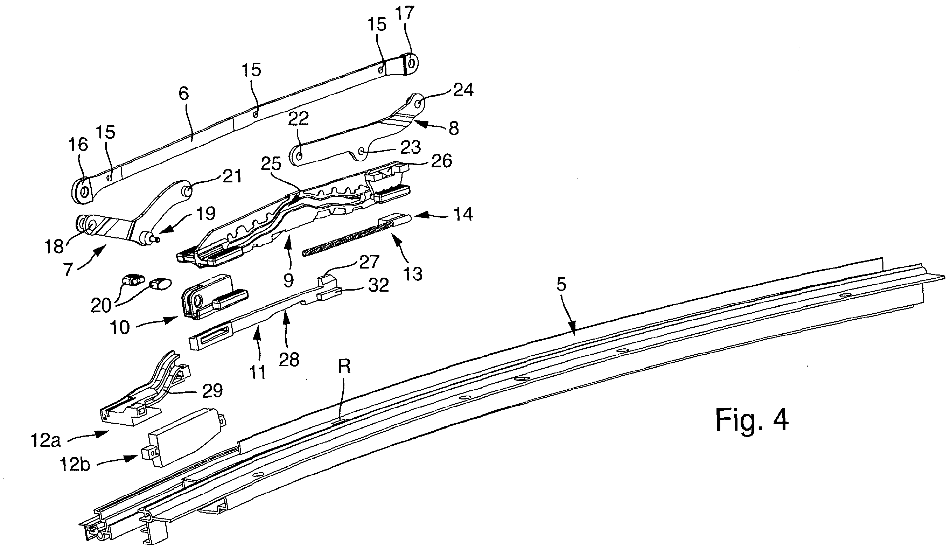

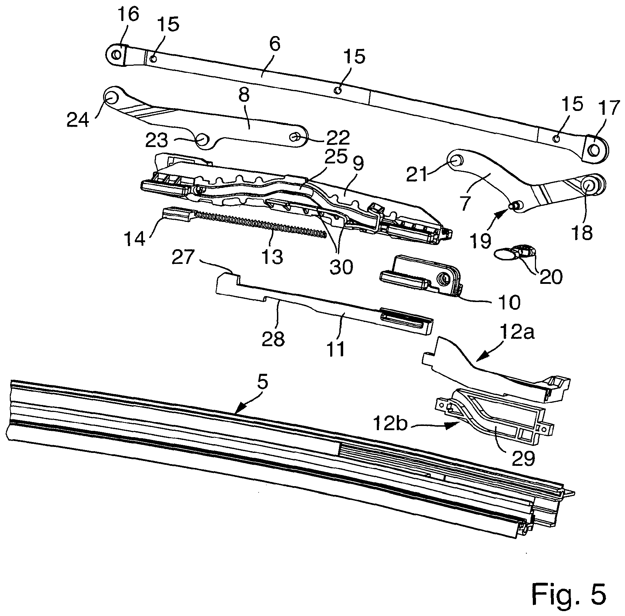

Anhand der Explosionsdarstellungen nach den Fig. 4 und 5 werden die einzelnen Teile und Abschnitte der Bauteilanordnung der linken Seite der Ausstell- und Führungsmechanik nachfolgend näher beschrieben.

Die Bauteilanordnung weist ein Befestigungsprofil 6 auf, das über drei über seine Länge verteilte Befestigungspunkte 15 mit einem Seitenrand des beweglichen Dachteiles 2, vorzugsweise durch Verschrauben oder Vernieten, fest verbindbar ist. Das Befestigungsprofil 6 weist - in normaler Fahrtrichtung des Personenkraftwagens gesehen - an seinem vorderen Stirnende einen vorderen Anlenkpunkt 16 sowie an seinem rückseitigen Stirnende einen hinteren Anlenkpunkt 17 auf. An dem vorderen Anlenkpunkt 16 ist mittels eines Lagerbolzens 18 ein vorderer Hebelfortsatz eines vorderen Ausstellhebels 7 schwenkbeweglich gelagert. Am hinteren Anlenkpunkt 17 ist mittels eines Lagerbolzens 24 ein rückseitiger Auslegerarm eines hinteren Ausstellhebels 8 schwenkbeweglich gelagert.

Der vordere Ausstellhebel 7 weist eine V-artige Gestaltung auf und ist mit einem rückseitigen Schenkelfortsatz über einen Lagerbolzen 21 schwenkbeweglich an einem Führungsschlitten 10 gelagert. Der vordere Ausstellhebel 7 ist zudem mittig mit einem Stützlager 19 versehen, das in einem Verbindungsbereich zwischen dem vorderen Hebelfortsatz und dem rückseitigen Auslegerarm am Ausstellhebel 7 befestigt ist. Das Stützlager 19 weist quer zur Bewegungsrichtung des Ausstellhebels 7 zu seinen gegenüberliegenden Seiten hin abragende Lagerzapfen auf, wobei auf jeden Lagerzapfen jeweils ein Gleitschuh 20 aufgesteckt ist.

Der Führungsschlitten 10, mit dem der rückseitige Auslegerarm des Ausstellhebels 7 schwenkbeweglich verbunden ist, ist nach Art eines blockförmigen Bauteils aus Kunststoff hergestellt und weist an seinen gegenüberliegenden Längsseiten jeweils einen Gleitschuh auf. Der Führungsschlitten 10 ist mittels der Gleitschuhe in einer oberen Führungsebene 5a der Führungsschienenanordnung 5 längsverschiebbar gelagert. Mit dem Führungsschlitten 10 einstückig verbunden ist ein aus Kunststoff einteilig hergestellter Steuerhebel 11. Der Steuerhebel 11 erstreckt sich von einer Rückseite des Führungsschlittens 10 aus in Längsrichtung nach hinten in Richtung des hinteren Ausstellhebels 8. Der Steuerhebel 11 ist aus thermoplastischem Kunststoff hergestellt und weist in unbelasteter Ruhestellung eine leichte Krümmung nach unten auf, so dass der Steuerhebel 11 in unbelastetem Ruhezustand vom Führungsschlitten 10 aus gegenüber einer Gleitebene des Führungsschlittens 10 leicht bogenförmig nach unten gekrümmt ist. Der Steuerhebel 11 weist an seinem vom Führungsschlitten 10 abliegenden Stirnende zum einen einen nach oben ragenden Raststeg 27 und zum anderen einen zur Seite hin abragenden Stütznocken 32 (Fig. 4) auf, der mit seiner Unterseite bündig zu einer Unterseite des Steuerhebels 11 ist.

Der hintere Ausstellhebel 8 ist mittels eines mittig im Bereich seiner Unterseite angeordneten Gleitbolzens 23 sowie mittels eines weiteren, im Bereich seiner Frontseite vorgesehenen Gleitbolzens 22 in einer Steuerkulisse 25 eines Steuerschlittens 9 verschiebbar gelagert. Der Steuerschlitten 9 ist mit Hilfe eines Gleitschuhpaares im Bereich seines vorderen Endes sowie mittels eines Gleitschuhpaares im Bereich seines rückseitigen Endes ebenfalls in der unteren Führungsebene 5b der Führungsschienenanordnung 5 verschiebbar gelagert. Der Steuerschlitten 9 ist - in Fahrtrichtung des Personenkraftwagens gesehen - in Abstand hinter dem Führungsschlitten 10 angeordnet. Die Form der Steuerkulisse 25 ist insbesondere aus den Fig. 4 und 5 gut erkennbar. Die Steuerkulisse 25 ist im Bereich eines schwertförmig nach oben ragenden Stegkörpers vorgesehen, der als kunststoffummantelter Metallsteg ausgeführt ist. Der Steuerschlitten 9 weist im Bereich einer zur Fahrzeugmitte hin gewandten Innenseite eine nach innen abragende Stützsteganordnung 30 auf, die mit dem Stütznocken 32 und der Unterseite des Steuerhebels 11 in montierter Betriebsstellung der gesamten Bauteilanordnung zusammenwirkt. Die Stützsteganordnung 30 hält den Steuerhebel 11 in einem Teilabschnitt des nachfolgend näher beschriebenen Bewegungsablaufes in einer gegenüber seiner unbelasteten Ruhelage nach oben gespannten, etwa geradlinig ausgerichteten Stützlage, in der der Steuerhebel 11 aufgrund seiner Materialelastizität unter Vorspannung nach oben gedrückt gehalten ist.

Der Steuerschlitten 9 wird mit Hilfe eines Antriebsübertragungsmittels in Form einer Flexwelle 13 in beiden Längsrichtungen der Führungsschienenanordnung 5 verfahren. Hierzu ist an einem vorderen Stirnende der Flexwelle 13 ein Mitnahmenocken 14 angeformt, der formschlüssig in eine komplementäre Aufnahme 26 am Steuerschlitten 9 eingepasst ist, um eine spielfreie Mitnahme des Steuerschlittens 9 bei entsprechenden Längsverfahrvorgängen der Flexwelle 13 in Fahrzeuglängsrichtung nach hinten oder nach vorne zu ermöglichen.

Die Führungsschienenanordnung 5 weist über ihre gesamte Länge durchgehend zwei übereinander angeordnete Führungsprofilierungen auf, die eine untere Führungsebene 5b sowie eine obere Führungsebene 5a bilden. Die Flexwelle 13 ist der unteren Führungsebene 5b zugeordnet. Der Steuerschlitten 9 ist mittels der Flexwelle 13 in der unteren Führungsebene 5b längsverfahrbar gelagert. Der vordere Führungsschlitten 10 hingegen ist mittels zweier Gleitschuhe in der oberen Führungsebene 5a längsverschiebbar gelagert.

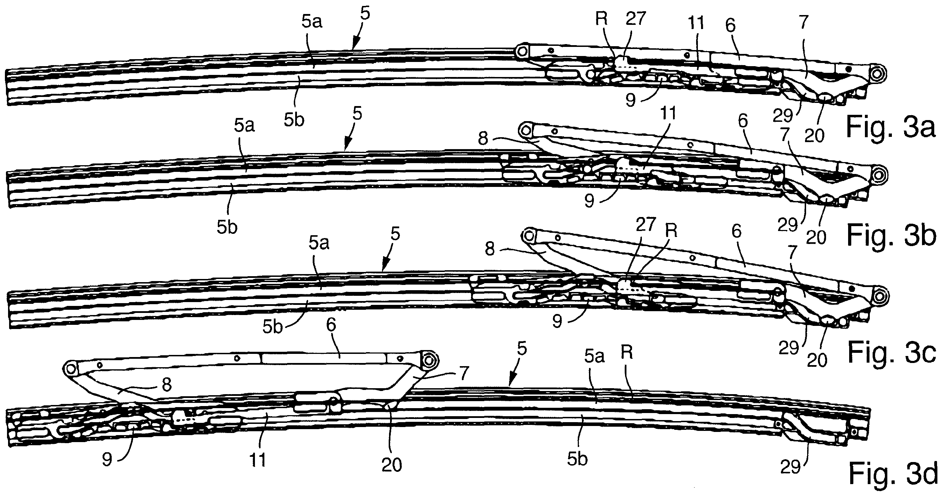

Die Führungsschienenanordnung 5 weist im Bereich einer oberen Begrenzungswandung der oberen Führungsebene 5a eine Rastaussparung R (siehe Fig. 4 und Fig. 3A bis 3D) auf, in die der Raststeg 27 des Steuerhebels 11 in nachfolgend näher beschriebener Weise einrastbar ist.

Frontseitig ist der Führungsschienenanordnung 5 zudem ein zweischaliger Führungsfortsatz 12a, 12b zugeordnet, der eine S-bogenförmige Steuerkurve 29 umfasst. In der Steuerkurve 29 ist das mittige Stützlager 19 mit den Gleitschuhen 20 des vorderen Ausstellhebels 7 geführt. Der Führungsfortsatz wird durch eine innere Halbschale 12a sowie eine äußere Halbschale 12b gebildet, die zu einem geschlossenen Führungsfortsatz zusammengefügt werden können und in montiertem Zustand für jeden der gegenüberliegenden Gleitschuhe 20 des Stützlagers 19 jeweils eine S-bogenförmig gekrümmte Führungsprofilierung definieren. Wie anhand der Fig. 2a bis 2d und 3a bis 3d erkennbar ist, dient der Führungsfortsatz 12a, 12b dazu, den vorderen Ausstellhebel 7 aus einer unterhalb der unteren Führungsebene 5b befindlichen Endposition zunächst um einen gewissen Betrag horizontal nach hinten zu verfahren, bevor das Stützlager 19 einschließlich des Ausstellhebels 7 angehoben und in die obere Führungsebene 5a verlagert wird. Dadurch ist es möglich, das bewegliche Dachteil 2 aus seiner Schließstellung zunächst unter einer frontseitig auf das Dachteil 2 wirkenden Dichtlippe herauszubewegen, bevor das Dachteil 2 angehoben wird.

Während das Stützlager des vorderen Ausstellhebels 7 sich demzufolge bei geschlossenem Dachteil 2 in der Führungskurve 29 des Führungsfortsatzes 12a, 12b unterhalb des Niveaus der unteren Führungsebene 5b befindet, ist der Führungsschlitten 10 auch in dieser vorderen Endposition bereits in der oberen Führungsebene 5a angeordnet. In der geschlossenen Endstellung des Dachteiles 2 ist der hintere Steuerschlitten 9 so unter den Steuerhebel 11 verfahren, dass die Stützsteganordnung 30 den Stütznocken 32 des Steuerhebels 11 von unten her in die Rastaussparung R der oberen Führungsebene 5a der Führungsschienenanordnung 5 gedrückt hält.

Für einen beginnenden Öffnungsvorgang verfährt die Flexwelle 13 den Steuerschlitten 9 längs der Führungsschienenanordnung 5 nach hinten, wodurch die beiden Gleitbolzen 22, 23 sich in der gekrümmten Steuerkulisse 25 bewegen, so dass der hintere Ausstellhebel 8 nach oben ausgesteuert wird (siehe Fig. 2b, 3b und 2c, 3c). Das Dachteil 2 stellt sich daher schräg nach oben aus.

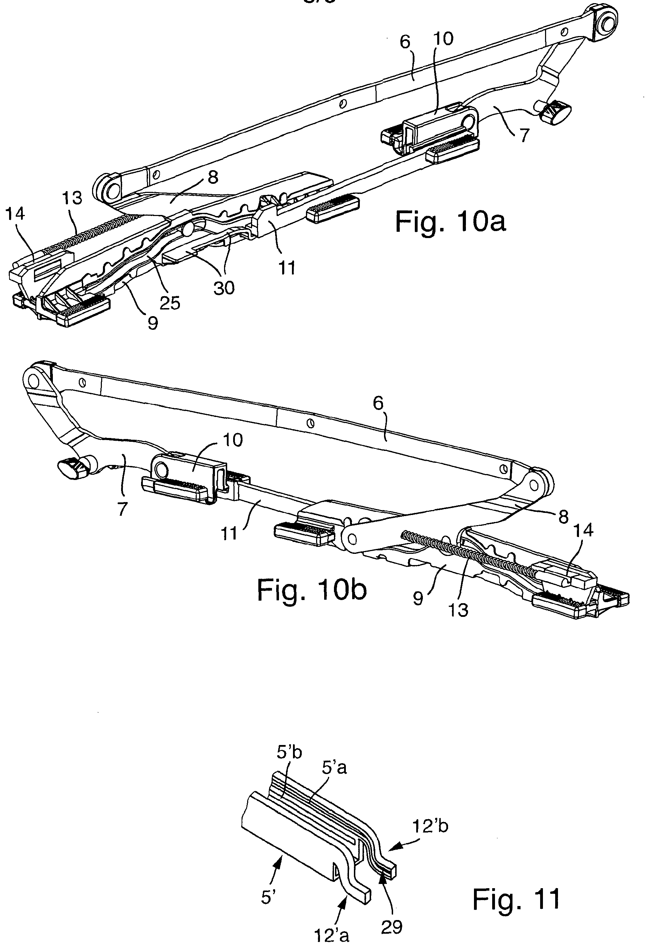

Da der Steuerhebel 11 während des beginnenden Verfahrvorganges des Steuerschlittens 9 in der Rastaussparung R der Führungsschienenanordnung 5 verriegelt bleibt, verbleibt auch der Führungsschlitten 10 zusammen mit dem vorderen Ausstellhebel 7 in seiner vorderen Endstellung. Bei einem weiteren Verfahren des Steuerschlittens 9 nach hinten gleitet der Stützsteg des Steuerhebels 11 längs einer Krümmung der Stützsteganordnung 30 des Steuerschlittens 9 nach unten, bis die Stützsteganordnung 30 die Bewegung des Steuerhebels 11 in eine Stützaussparung nach unten freigibt, in die der Stütznocken 32 des Steuerhebels 11 eintaucht. Der Steuerhebel 11 weist zudem im Bereich seiner Unterseite eine Ausnehmung 28 auf, die in in die Aussparung der Stützsteganordnung 30 eingetauchtem Zustand des Stütznockens 32 einen Anschlag 31 des Steuerschlittens 9 hintergreift. Die zwangsläufige Bewegung des Steuerhebels 11 nach unten aufgrund der Wegnahme der Stützbelastung von unten her erfolgt durch die Bestrebung des Steuerhebels 11, sich aus seiner vorgespannten oberen Lage in seine ungespannte Ruhelage nach unten zu bewegen. Mit dem formschlüssigen Eingreifen des Stütznockens 32 in die Aussparung der Stützsteganordnung 30 sowie das Hintergreifen zwischen Ausnehmung 28 und Anschlag 31 ist der Steuerhebel 11 und der Führungsschlitten 10 formschlüssig bewegungsübertragend mit dem Steuerschlitten 9 verbunden. Eine weitere Bewegung des Steuerschlittens 9 nach hinten führt demzufolge zu einer Mitnahme des Steuerhebels 11 und des Führungsschlittens 10 ebenfalls nach hinten. Hierdurch gleitet das Stützlager 19 mit seinen Gleitschuhen 20 in der Führungskurve 29 nach hinten und nach oben, bis auch das Stützlager 19 mit seinen Gleitschuhen 20 die obere Führungsebene 5a erreicht hat. Dabei wird aufgrund der zwangsläufigen Kinematik auch der vordere Ausstellhebel 7 nach oben ausgestellt, so dass das Befestigungsprofil 6 mitsamt dem beweglichen Dachteil 2 vollständig nach oben ausgestellt wird und nach hinten verfahren werden kann (siehe Fig. 2d und 3d in Verbindung mit Fig. 10a und 10b).

Durch einen entsprechend umgekehrten Bewegungsvorgang wird das Dachteil 2 aus der nach hinten verfahrenen Öffnungsstellung wieder in seine Schließstellung überführt. Dabei drückt die Stützsteganordnung 30 den Steuerhebel 11 wieder in die Raststellung innerhalb der Rastaussparung R, sobald die vordere Endstellung des vorderen Ausstellhebels 7 im Bereich der Führungskurve 29 des Führungsfortsatzes 12a, 12b wieder erreicht ist.

Figur 11 zeigt eine zu der Führungsschienenanordnung 5 nach den Fig. 1 bis Fig. 10b abgewandelte Führungschienenanordnung 5', die bei dem zuvor anhand der Fig. 1 bis 10b beschriebenen Dachsystem 1 alternativ zu der Führungsschienenanordnung 5 eingesetzt werden kann. Wesentlicher Unterschied bei der Führungsschienenanordnung 5' ist es, dass die frontseitigen Kulissenelemente nicht als separate Kulisseneinsätze wie bei der Ausführungsform nach den Fig. 1 bis 10b, sondern vielmehr als einstückig angeformte Fortsätze 12'a, 12'b gestaltet sind. Auch die Fortsätze 12'a und 12'b definieren in gleicher Weise eine Führungskurve 29, wie dies bei der zuvor beschriebenen Ausführungsform der Fall war. Die einstückige Ausformung der Fortsätze 12'a, 12'b, die auch als Führungsfortsätze bezeichnet werden, erfolgt dadurch, dass die Führungsschienenanordnung 5' aus Metall, insbesondere aus einer Leichtmetalllegierung, hergestellt ist. Die Führungsschienenanordnung 5' ist im Wesentlichen als stabiler U-Profil-Körper gestaltet. In ihrem Frontbereich, in dem die Fortsätze 12'a, 12'b ausgeformt sind, wird ein unterer Quersteg des U-Profil-Körpers entfernt, so dass die Fortsätze 12'a, 12'b von den Seitenwandbereichen der Führungsschienenanordnung 5' aus einstückig nach vorne ragen. Die Fortsätze 12'a, 12'b bilden nach vorne ragende Finger, die entsprechend der gewünschten Führungskurve 29 durch plastische Deformation gebogen werden können. In den Fortsätzen 12'a, 12'b ist jeweils eine Führungsnut vorgesehen, die analog der zuvor beschriebenen Ausführungsform in die obere Führungsebene 5'a der Führungsschienenanordnung 5' übergehen. Die fingerförmigen Fortsätze 12'a, 12'b können stirnseitig durch eine Querversteifung miteinander verbunden sein.

## Patentansprüche

1. Dachsystem für ein Kraftfahrzeug mit einem ortsfesten Dachausschnitt sowie mit einem beweglich gelagerten Dachteil (2) zum Verschließen und Freigeben des Dachausschnittes, das mittels einer Ausstell- und Führungsmechanik zwischen einer Schließposition, einer Ausstellposition und einer Öffnungsposition verlagerbar ist, wobei die Ausstell- und Führungsmechanik beidseitig des Dachteiles jeweils einen - in Fahrtrichtung des Kraftfahrzeugs gesehen - vorderen Ausstellhebel (7) sowie einen hinteren Ausstellhebel (8) umfasst, die über jeweils einen Anlenkpunkt (18, 24) mit dem Dachteil (2) schwenkbeweglich verbunden sind und mit einem in einer Führungsschienenanordnung (5) verfahrbaren Steuerschlitten (9) in Wirkverbindung stehen, wobei der vordere Ausstellhebel (7) mit einem Anlenkpunkt (21) an einem Führungsschlitten (10) gelagert ist, wobei der hintere Ausstellhebel (8) an dem Steuerschlitten (9) gelagert ist, und wobei der Führungsschlitten (10) einen Steuerhebel (11) umfasst,
**dadurch gekennzeichnet, dass** der Steuerhebel (11) ein Rastmittel (27) zur Verrastung in einer Rastaussparung (R) der Führungsschienenanordnung (5) sowie einen Mitnehmerabschnitt (28, 32) aufweist, mittels dessen der Führungsschlitten (10) durch den Steuerschlitten (9) in Längsrichtung der Führungsschienenanordnung (5) mitnehmbar ist.

2. Dachsystem nach Anspruch 1, **dadurch gekennzeichnet, dass** der Steuerhebel (11) zwischen einer Raststellung in der Rastaussparung (R) und einer Mitnahmestellung am Steuerschlitten (9) beweglich geführt ist.

3. Dachsystem nach Anspruch 2, **dadurch gekennzeichnet, dass** der Steuerhebel (11) einstückig am Führungsschlitten (10) angeordnet ist und materialelastisch beweglich ist.

4. Dachsystem nach Anspruch 1, **dadurch gekennzeichnet, dass** der vordere Ausstellhebel (7) ein Stützlager (19) zur Überführung des Ausstellhebels (7) aus einem vorderen Führungsfortsatz (12a, 12b) in eine obere Führungsebene (5a) der Führungsschienenanordnung (5) umfasst, wobei das Stützlager (19) insbesondere durch zwei Gleitschuhe (20) gebildet ist, die den Ausstellhebel (7) innenseitig und außenseitig flankieren.

5. Dachsystem nach Anspruch 1, **dadurch gekennzeichnet, dass** der Führungsschlitten (10) als Lagerbock für den hinteren Anlenkpunkt (21) des vorderen Ausstellhebels (7) aus Kunststoff hergestellt ist, und dass der Steuerhebel (11) einstückig mit dem Lagerbock verbunden ist und nach hinten in Richtung des Steuerschlittens (9) abragt.

6. Dachsystem nach Anspruch 1, **dadurch gekennzeichnet, dass** der Steuerschlitten (9) eine Steuerkulisse (25) zum Aussteuern des hinteren Ausstellhebels (8) sowie eine Stütz- und Mitnahmeprofilierung (30, 31) zum Steuern des Steuerhebels (11) zwischen seiner Rast- und seiner Mitnahmestellung aufweist.

7. Dachsystem nach Anspruch 6, **dadurch gekennzeichnet, dass** die Steuerkulisse (25) in einem kunststoffummantelten Metallsteg vorgesehen ist.

8. Dachsystem nach einem der vorhergehenden Ansprüche, **dadurch gekennzeichnet, dass** an dem Steuerschlitten (9) ein Antriebsübertragungsmittel in Form eines Iängserstreckten Zug-Druck-Mittels (13) angreift.

9. Dachsystem nach Anspruch 8, **dadurch gekennzeichnet, dass** an einem Stirnendbereich des Zug-Druck-Mittels (13) ein Mitnahmenocken (14) angeformt ist, der formschlüssig in eine komplementäre Aufnahme (26) am Steuerschlitten (9) eingreift.

10. Dachsystem nach einem der vorhergehenden Ansprüche, **dadurch gekennzeichnet, dass** die dachteilseitigen Anlenkpunkte (18, 24) des vorderen und des hinteren Ausstellhebels (7, 8) über ein einteiliges, formstabiles Befestigungsprofil (6) miteinander in Verbindung stehen, das sich längs eines Seitenrandes des Dachteiles (2) erstreckt und an dem Seitenrand des Dachteiles (2) befestigt ist.

11. Dachsystem nach Anspruch 10, **dadurch gekennzeichnet, dass** über eine Länge des Befestigungsprofiles (6) verteilt mehr als zwei Befestigungspunkte (15) vorgesehen sind, an denen das Befestigungsprofil (6) an dem Dachteil (2) befestigt ist.

12. Dachsystem nach Anspruch 4, **dadurch gekennzeichnet, dass** die Führungsschienenanordnung (5) frontseitig mit zwei den Führungsfortsatz bildenden, zueinander spiegelsymmetrischen Kulissenelementen (12a, 12b) versehen ist, die zur Gleitführung der Gleitschuhe (20) des Stützlagers (19) aus einer unteren Ruhestellung in die obere Führungsebene (5a) vorgesehen sind und das Stützlager (19) außen- und innenseitig flankieren.

13. Dachsystem nach Anspruch 12, **dadurch gekennzeichnet, dass** die Kulissenelemente (12'a, 12'b) als einstückige Fortsätze aus der Führungsschienenanordnung (5') ausgeformt sind.

14. Dachsystem nach Anspruch 1 oder 2, **dadurch gekennzeichnet, dass** die Rastaussparung mit einem Kunststoffeinsatz versehen ist.

## Claims

1. Roof system for a motor vehicle having a fixed roof cutout and having a movably mounted roof part (2) for closing and opening the roof cutout which is displaceable by means of a tilt and guide mechanism between a closed position, a tilt position and an open position, wherein the tilt and guide mechanism includes on both sides of the roof part in each case - when viewed in the direction of travel of the motor vehicle - a front tilt lever (7) and a rear tilt lever (8) which are pivotably connected to the roof part (2) in each case by means of a pivot point (18, 24) and are operatively connected to a control carriage (9) which is movable in a guide rail arrangement (5), wherein the front tilt lever (7) is mounted on a guide carriage (10) by way of a pivot point (21), wherein the rear tilt lever (8) is mounted on the control carriage (9), and wherein the guide carriage (10) comprises a control lever (11),
**characterized in that**
the control lever (11) comprises a latching means (27) for latching in a latching recess (R) of the guide rail arrangement (5) and an entrainment portion (28, 32) by means of which the guide carriage (10) is entrainable by the control carriage (9) in the longitudinal direction of the guide rail arrangement (5).

2. Roof system according to claim 1, **characterized in that** the control lever (11) is guided so as to be movable between a latching position in the latching recess (R) and an entrainment position on the control carriage (9).

3. Roof system according to claim 2, **characterized in that** the control lever (11) is arranged integrally on the guide carriage (10) and is movable as a result of the elasticity of the material.

4. Roof system according to claim 1, **characterized in that** the front tilt lever (7) includes a support bearing (19) for transferring the tilt lever (7) from a front guide continuation (12a, 12b) into an upper guide plane (5a) of the guide rail arrangement (5), wherein the support bearing (19) is formed in particular by two slide shoes (20) which flank the tilt lever (7) on the inside and on the outside.

5. Roof system according to claim 1, **characterized in that** the guide carriage (10) is produced from plastics material as a bearing block for the rear pivot point (21) of the front tilt lever (7), and **in that** the control lever (11) is connected integrally to the bearing block and projects rearward in the direction of the control carriage (9).

6. Roof system according to claim 1, **characterized in that** the control carriage (9) comprises a control linkage (25) for actuating the rear tilt lever (8) and a support and entrainment profiling (30, 31) for controlling the control lever (11) between its latching and its entrainment position.

7. Roof system according to claim 6, **characterized in that** the control linkage (25) is provided in a plastic-coated metal web.

8. Roof system according to any of the preceding claims, **characterized in that** a drive transmitting means in the form of a longitudinally extended push-pull means (13) cooperates with the control carriage (9).

9. Roof system according to claim 8, **characterized in that** an entrainment cam (14), which engages in a positive locking manner into a complementary receiving means (26) on the control carriage (9), is integrally molded on an end-face region of the push-pull means (13).

10. Roof system according to any of the preceding claims, **characterized in that** the roof part pivot points (18, 24) of the front and of the rear tilt lever (7, 8) are interconnected by means of an integral, dimensionally stable fastening profile (6) which extends along a side edge of the roof part (2) and is fastened on the side edge of the roof part (2).

11. Roof system according to claim 10, **characterized in that** more than two fastening points (15), at which the fastening profile (6) is fastened on the roof part (2), are provided distributed over a length of the fastening profile (6).

12. Roof system according to claim 4, **characterized in that** the guide rail arrangement (5) is provided at the front with two linkage elements (12a, 12b) which form the guide continuation, are mirror-symmetrical to one another, are provided for slidingly guiding the slide shoes (20) of the support bearing (19) from a lower rest position into the upper guide plane (5a) and flank the support bearing (19) on the outside and on the inside.

13. Roof system according to claim 12, **characterized in that** the linkage elements (12'a, 12'b) are formed as integral continuations from the guide rail arrangement (5').

14. Roof system according to claim 1 or 2, **characterized in that** the latching recess is provided with a plastics material insert.

## Revendications

1. Système de toit pour un véhicule automobile, comprenant une ouverture de toit fixe ainsi qu'une partie de toit (2) montée de manière mobile pour fermer et ouvrir l'ouverture de toit, la partie de toit pouvant être déplacée par le biais d'un mécanisme de levage et de guidage entre une position de fermeture, une position de levage et une position d'ouverture, le mécanisme de levage et de guidage comportant sur chacun des deux côtés de la partie de toit - vu dans la direction de marche du véhicule automobile - un levier de levage avant (7) ainsi qu'un levier de levage arrière (8) reliés à pivotement à la partie de toit (2) par un point de pivot (18, 24) respectif et sont en liaison active avec un chariot de commande (9) déplaçable dans un arrangement de rail de guidage (5), dans lequel le levier de levage avant (7) est monté sur un chariot de guidage (10) par un point de pivot (21), dans lequel le levier de levage arrière (8) est monté sur le chariot de commande (9), et dans lequel le chariot de guidage (10) comporte un levier de commande (11),
**caractérisé en ce que**
le levier de commande (11) présente un moyen d'enclenchement (27) pour enclencher dans un renfoncement d'enclenchement (R) de l'arrangement de rail de guidage (5) ainsi qu'une section entraîneur (28, 32) par le biais de laquelle le chariot de guidage (10) est entraînable par le chariot de commande (9) dans la direction longitudinale de l'arrangement de rail de guidage (5).

2. Système de toit selon la revendication 1, **caractérisé en ce que** le levier de commande (11) est guidé mouvant entre une position d'enclenchement dans le renfoncement d'enclenchement (R) et une position d'entraînement sur le chariot de commande (9).

3. Système de toit selon la revendication 2, **caractérisé en ce que** le levier de commande (11) est arrangé d'un seul tenant sur le chariot de guidage (10) et est mobile par élasticité de la matière.

4. Système de toit selon la revendication 1, **caractérisé en ce que** le levier de levage avant (7) comporte un palier support (19) pour transférer le levier de levage (7) d'un prolongement de guidage avant (12a, 12b) vers un plan de guidage supérieur (5a) de l'arrangement de rail de guidage (5), dans lequel le palier support (19) en particulier est formé par deux patins de glissement (20) flanquant le levier de levage (7) à l'intérieur et à l'extérieur.

5. Système de toit selon la revendication 1, **caractérisé en ce que** le chariot de guidage (10) est fabriqué de matière plastique sous forme de bloc de support pour le point de pivot arrière (21) du levier de levage avant (7), et **en ce que** le levier de commande (11) est relié au bloc de support d'un seul tenant et fait saillie vers arrière dans la direction du chariot de commande (9).

6. Système de toit selon la revendication 1, **caractérisé en ce que** le chariot de commande (9) présente une coulisse de commande (25) pour actionner le levier de levage arrière (8) ainsi qu'un profilage de support et d'entraînement (30, 31) pour commander le levier de commande (11) entre sa position d'enclenchement et sa position d'entraînement.

7. Système de toit selon la revendication 6, **caractérisé en ce que** la coulisse de commande (25) est prévue dans une barrette métallique enrobée de matière plastique.

8. Système de toit selon l'une quelconque des revendications précédentes, **caractérisé en ce qu'**un moyen de transmission d'entraînement sous forme d'un moyen de pression-traction (13) s'étendant longitudinalement s'engage dans le chariot de commande (9).

9. Système de toit selon la revendication 8, **caractérisé en ce qu'**une came d'entraînement (14) est moulée sur une zone d'extrémité frontale du moyen de pression-traction (13), ladite came s'engageant par complémentarité de formes dans un logement (26) complémentaire sur le chariot de commande (9).

10. Système de toit selon l'une quelconque des revendications précédentes, **caractérisé en ce que** les points de pivotement (18, 24) du côté partie de toit des leviers de levage avant et arrière (7, 8) sont reliés l'un à l'autre par un profilé de fixation (6) monobloc et dimensionnellement stable, ledit profilé s'étendant le long d'un bord latéral de la partie de toit (2) et étant fixé sur le bord latéral de la partie de toit (2).

11. Système de toit selon la revendication 10, **caractérisé en ce que** plus de deux points de fixation (15), sur lesquels le profilé de fixation (6) est fixé à la partie de toit (2), sont prévus répartis sur une longueur du profilé de fixation (6).

12. Système de toit selon la revendication 4, **caractérisé en ce que** l'arrangement de rail de guidage (5) est pourvu, sur son côté frontal, de deux éléments de coulisse (12a, 12b) avec une symétrie spéculaire l'un par rapport à l'autre formant le prolongement de guidage, les éléments de coulisse étant prévus pour le guidage coulissant des patins de glissement (20) du palier support (19) de la position de repos inférieur au plan de guidage supérieur (5a) et flanquant le palier support (19) à l'intérieur et à l'extérieur.

13. Système de toit selon la revendication 12, **caractérisé en ce que** les éléments de coulisse (12'a, 12'b) sont formés à partir de l'arrangement de rail de guidage (5') en prolongements intégrales.

14. Système de toit selon la revendication 1 ou 2, **caractérisé en ce que** le renfoncement d'enclenchement est muni d'un insert en matière plastique.
